Europäisches Patentamt

European Patent Office

Office européen des brevets

(19)

(11) Numéro de publication : **0 236 174**
**B1**

(12) **FASCICULE DE BREVET EUROPÉEN**

(45) Date de publication du fascicule du brevet :
28.06.89

(51) Int. Cl.⁴ : **B 65 G 47/14**

(21) Numéro de dépôt : 87400172.0

(22) Date de dépôt : 26.01.87

(54) **Dispositif de distribution pour la délivrance, un à un, et dressés verticalement, de quelconques objets à un quelconque convoyeur.**

(30) Priorité : 27.01.86 FR 8601077

(43) Date de publication de la demande :
09.09.87 Bulletin 87/37

(45) Mention de la délivrance du brevet :
28.06.89 Bulletin 89/26

(84) Etats contractants désignés :
DE ES GB IT

(56) Documents cités :
US—A— 3 948 386
RESEARCH DISCLOSURE, no. 131, mars 1975, page
14, no. 13109, Industrial Opportunities Ltd, GB; "Supporting a thin-walled container during capping"

(73) Titulaire : **MACHINES DUBUIT**
**60 Rue Vitruve**
**F-75020 Paris (FR)**

(72) Inventeur : **Dubuit, Jean-Louis**
**63 Rue du Chemin Vert**
**F-75011 Paris (FR)**
Inventeur : **Rouly, Eric**
**44 Avenue des Glycines**
**F-77340 Pontault Combault (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

La présente invention concerne d'une manière générale la délivrance, un à un, et dressés verticalement, de quelconques objets à un quelconque convoyeur à alimenter, et, par exemple, de quelconques flacons ou autres objets creux en matière synthétique, notamment pour la desserte d'une installation propre à l'application d'un quelconque traitement à de tels objets.

Elle vise plus particulièrement les dispositifs de distribution du genre comportant, pour ce faire, d'une part, une cuve à axe incliné sur la verticale, qui est destinée à recevoir en vrac les objets à distribuer, et dont le fond est formé d'un disque, qui est monté rotatif, et qui présente, répartis circulairement à sa périphérie, pour l'entraînement à l'unité desdits objets, une pluralité d'évidements propres chacun à recevoir un tel objet, avec, disposée en dessous dudit disque rotatif, parallèlement à celui-ci, une plaque, qui est fixe, et qui présente, en partie haute, sur le trajet des évidements de ce disque rotatif, une ouverture de libération, propre au passage un par un desdits objets, et, d'autre part, une pluralité de godets de chute, qui interviennent entre la cuve et le convoyeur à alimenter, et qui, propres chacun à recevoir à l'unité lesdits objets, sont admis à défiler un par un à l'aplomb de l'ouverture de libération de ladite cuve.

Ainsi, à chaque fois que, entraîné par le disque rotatif présent au fond de la cuve, l'un des objets à distribuer, dûment orienté horizontalement par l'évidement dudit disque rotatif dans lequel il a dû au moins partiellement s'engager pour être ainsi entraîné par celui-ci, arrive au droit de l'ouverture de libération de ladite cuve, il tombe par simple gravité, tout en basculant autour d'une horizontale, dans le godet de chute présent à l'aplombs de cette ouverture de libération, et il parvient, ainsi, dressé verticalement, comme recherché, sur le convoyeur à alimenter.

Un tel dispositif de distribution se trouve par exemple décrit dans FR-A-2 370 656.

Mais, en pratique, dans cette demande de brevet français, les couloirs de chute sont solidaires en rotation du disque rotatif de la cuve, et, comme lui, ils appartiennent ainsi à celle-ci, en étant disposés dans un compartiment de cette cuve sous-jacent à son fond.

Cette disposition, si elle peut donner satisfaction pour certaines applications, et notamment pour celles pour lesquelles il est possible de se satisfaire d'une cadence de distribution relativement modérée, conduit à divers inconvénients.

Tout d'abord, du fait même du compartiment qu'elle doit former pour le logement des godets de chute, la cuve présente, à sa base, une forme relativement complexe, en tronc de cône.

En outre, l'inertie de l'ensemble de la masse rotative en jeu se trouve augmentée de celle de ces couloirs de chute, ce qui nécessite des moyens d'entraînement à la mesure de cette inertie.

De plus, du fait qu'ils sont solidaires en rotation du disque rotatif, dont l'axe, comme celui de la cuve, est incliné sur la verticale, ces couloirs de chute, lors de leur défilé à l'aplomb de l'ouverture de libération de la cuve, ne restent chacun à tour de rôle verticaux qu'un instant relativement court, insuffisant en tout cas pour que les objets à distribuer qui y chutent aient le temps de les parcourir et d'en être libérés.

En pratique, cette libération ne peut dès lors intervenir qu'au tour suivant, et des dispositions doivent donc être prises pour que puissent ainsi momentanément subsister simultanément, dans un tel godet de chute, en étant superposés l'un à l'autre tout en étant convenablement isolés l'un de l'autre, deux objets à distribuer.

Outre que l'inertie de l'ensemble de la masse rotative en jeu se trouve encore augmentée par la deuxième série d'objets à distribuer ainsi à entraîner sur un tour, et qu'il résulte inévitablement une certaine complication mécanique du fait de la hauteur qu'il faut alors donner aux godets de chute et de la nécessité qu'il y a de les fractionner verticalement en deux tronçons pour la séparation recherchée pour les deux objets à distribuer qui peuvent y être présents simultanément, les risques de coincement de tels objets dans de tels godets de chute se trouvent multipliés d'autant.

Or, enfermés qu'ils sont dans un compartiment de la cuve, ces godets de chute sont difficilement accessibles, en sorte que tout coincement d'un objet à distribuer dans un tel godet de chute entraîne inévitablement une perturbation notable du fonctionnement de l'ensemble, au préjudice de son rendement.

Enfin, et surtout, les godets de chute étant entraînés en rotation et intervenant à la périphérie de la cuve, et donc suivant une circonférence de diamètre non négligeable, les objets à distribuer, lorsqu'ils en sont libérés, se trouvent soumis à une force centrifuge importante, qui en compromet gravement la stabilité lors de leur prise en charge par le convoyeur à alimenter, au risque de les voir basculer contre celui-ci, même si, pour tenter de surmonter cette difficulté, ce convoyeur est doté de moyens d'aspiration.

Là encore, tout basculement intempestif de ces objets sur ce convoyeur à leur arrivée sur celui-ci ne peut que perturber gravement le fonctionnement de l'ensemble.

En pratique, pour maintenir dans des limites admissibles les effets de la force centrifuge, il faut se contenter d'un diamètre relativement modéré pour la cuve et/ou d'une vitesse de rotation relativement modérée pour le disque qui en forme le fond, ce qui implique une limitation des capacités de l'ensemble, et notamment de la cadence de distribution susceptible d'être assurée par celui-ci.

La présente invention a d'une manière générale pour objet une disposition, qui, en permettant d'éviter ces inconvénients, est avantageusement susceptible d'autoriser si désiré des cadences de distribution élevées et conduit en outre à d'autres avantages.

De manière plus précise, elle a pour objet un dispositif de distribution du genre comportant, pour la délivrance, un à un, et dressés verticalement, de quelconques objets à un quelconque convoyeur à alimenter, d'une part, une cuve à axe incliné sur la verticale, qui est destinée à recevoir en vrac les objets à distribuer, et dont le fond est formé d'un disque, qui est monté rotatif, et qui présente, répartis circulairement à sa périphérie, pour l'entraînement à l'unité desdits objets, une pluralité d'évidements propres chacun à recevoir un tel objet, avec, disposée en dessous dudit disque rotatif parallèlement à celui-ci, une plaque, qui est fixe, et qui présente, en partie haute, sur le trajet des évidements de ce disque rotatif, une libération, propre au passage un par un desdits objets, et, d'autre part, une pluralité de godets de chute, qui interviennent entre la cuve et le convoyeur à alimenter, et qui, propres chacun à recevoir à l'unité les objets à distribuer, sont admis à défiler un par un à l'aplomb de l'ouverture de libération de ladite cuve, ce dispositif de distribution étant d'une manière générale caractérisé en ce que les godets de chute sont portés par un convoyeur intermédiaire distinct qui, fermé sur lui-même en boucle sans fin, est entraîné en synchronisme avec le disque rotatif de la cuve, et qui, par une partie de son trajet, s'étend sous la partie haute du fond de ladite cuve, tandis que, par une autre partie dudit trajet, il surplombe le convoyeur à alimenter.

Grâce à une telle disposition, les objets à distribuer peuvent être déposés avec une grande sûreté sur le convoyeur à alimenter, sans être alors soumis à une quelconque force centrifuge, et, par suite, sans risque de basculer.

Il suffit, en effet, que la dépose de ces objets sur le convoyeur à alimenter se fasse par un brin rectiligne du convoyeur intermédiaire mis en œuvre suivant l'invention, c'est par un tel brin rectiligne que ce convoyeur intermédiaire surplombe localement le convoyeur à alimenter.

Aucune limite n'est dès lors à imposer à la cadence de distribution pour minimiser les effets d'une éventuelle force centrifuge.

En outre, les godets de chute étant ainsi portés par un convoyeur distinct de la cuve, ils n'ont chacun à faire transiter qu'un objet à la fois, ce qui permet d'en minimiser la hauteur et de leur conférer une grande simplicité, et ils s'étendent avantageusement en permanence verticalement, ce qui minimise les risques de voir un tel objet s'y coincer.

En toute hypothèse, libérés de la cuve, ces godets de chute sont aisément accessibles, ce qui, dans l'éventualité du coincement d'un objet à distribuer, minimise avantageusement les conséquences d'un tel incident.

En bref, le distributeur suivant l'invention associe avantageusement une grande sûreté de fonctionnement à des possibilités de cadences de distribution élevées, et, relevant d'une mécanique relativement simple, il est d'un coût relativement modéré.

Les caractéristiques et avantages de l'invention ressortiront d'ailleurs de la description qui va suivre, à titre d'exemple, en référence aux dessins schématiques annexés sur lesquels :

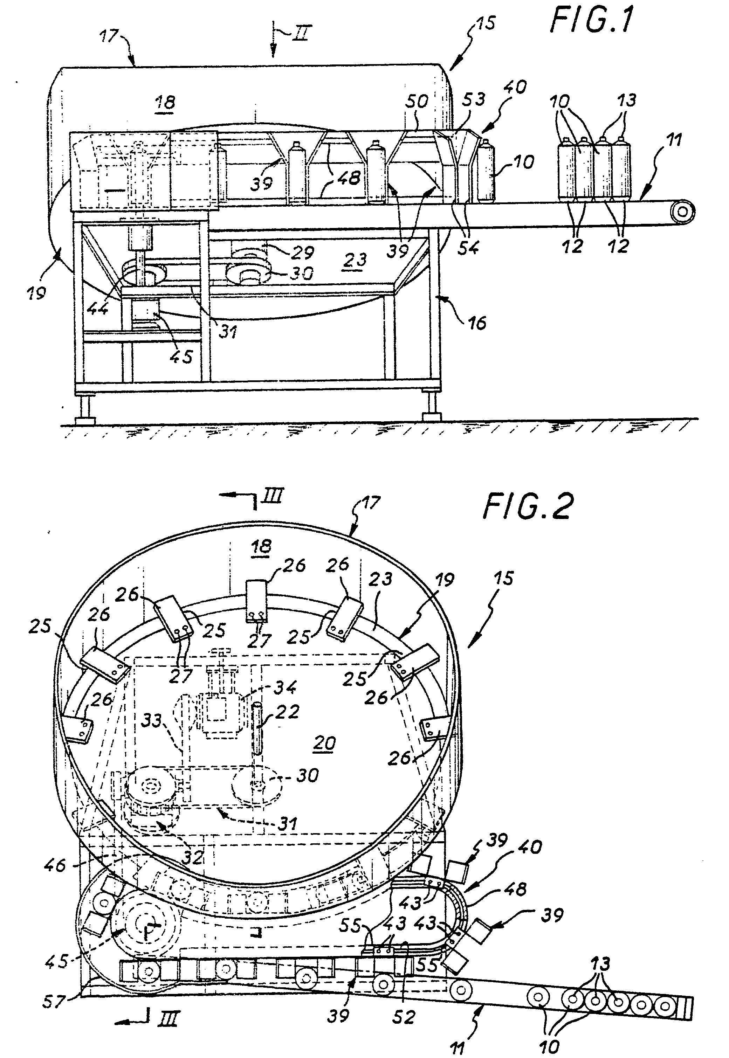

la figure 1 est une vue en élévation d'un dispositif de distribution suivant l'invention ;

la figure 2 en est, avec des arrachements locaux, et après enlèvement d'une partie des éléments normalement présents dans sa cuve, une vue en plan, suivant la flèche II de la figure 1 ;

la figure 3 en est une vue en coupe transversale, suivant la ligne brisée III-III de la figure 2 ;

la figure 4 reprend, à échelle supérieure, le détail de la figure 3 repéré par un encart IV sur celle-ci ;

la figure 5 est, à échelle différente, une vue en élévation, suivant la flèche V de la figure 4, et représenté isolément, d'un des godets de chute que comporte ce dispositif de distribution.

Globalement, et tel qu'illustré par ces figures, il s'agit de délivrer, un par un, et dressés verticalement, de quelconques objets 10 à un quelconque convoyeur 11 à alimenter, lui-même destiné à la desserte d'une quelconque installation.

Par exemple, et tel que représenté, les objets 10 ainsi à distribuer sont des flacons, et plus précisément des flacons en matière synthétique, à culot 12 et goulot 13, et ces flacons doivent porter par leur culot 12 sur le convoyeur 11 à alimenter.

Dans la forme de mise en œuvre illustrée, ce convoyeur 11 est un convoyeur à bande.

S'agissant d'un convoyeur de type traditionnel, il ne sera pas décrit ici.

Il suffira d'indiquer que, si désiré, et de manière connue en soi, il peut être associé à son brin supérieur des moyens d'aspiration, propres à une stabilisation des flacons 10, et que son dit brin supérieur peut, sur une partie au moins de sa longueur, être encadré par des guides, pour un bon guidage desdits flacons 10.

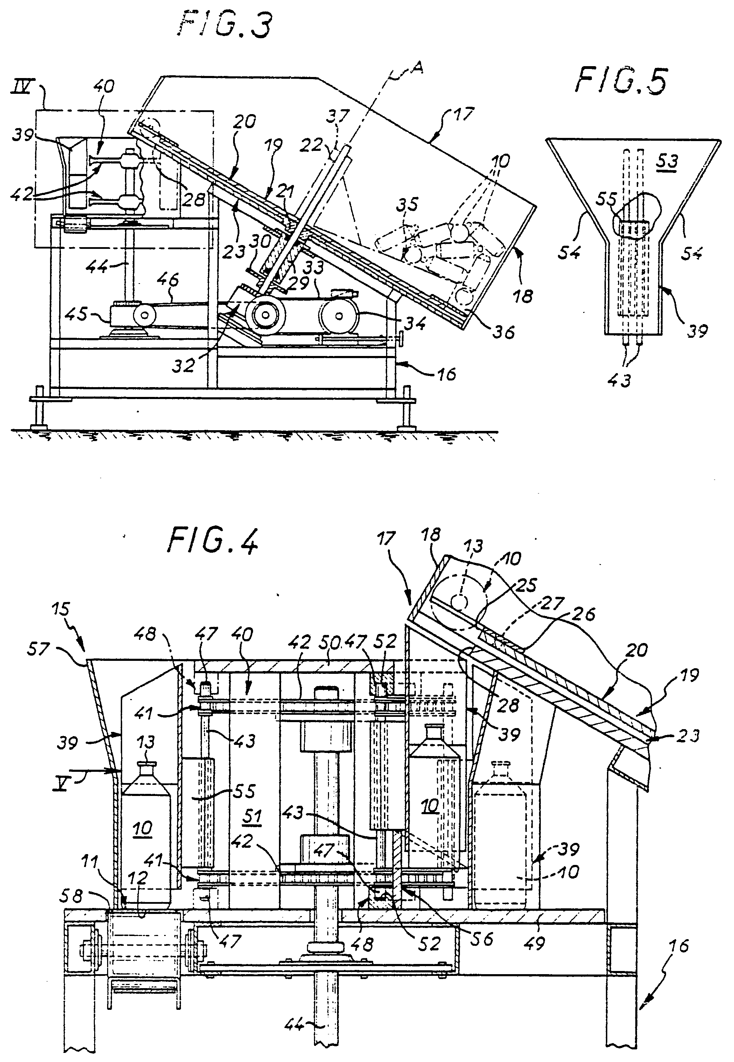

Le dispositif de distribution 15 mis en œuvre suivant l'invention pour la délivrance de flacons 10 au convoyeur 11 à alimenter comporte, portée par un bâti 16, dont la réalisation, classique en la matière, relève de l'homme de l'art, et ne sera donc pas décrite en détail ici, une cuve 17, qui, tel que schématisé en traits interrompus à la figure 3, est destinée à recevoir en vrac les flacons 10 à distribuer, et dont l'axe A, également schématisé en traits interrompus sur cette figure 3, est incliné sur la verticale.

Globalement, cette cuve 17 est formé, d'une part, d'une virole 18, qui en constitue la paroi latérale, et, d'autre part, sensiblement perpendiculairement à l'axe A, d'un fond 19.

En pratique, la virole 18 est une virole cylindrique de contour circulaire, et, dans la forme de réalisation représentée, son bord libre est, en partie haute, tronqué, pour arasement à l'horizontale de l'ensemble.

Quoi qu'il en soit, cette virole 18 est fixe.

Le fond 19, par contre, est formé d'un disque 20, qui, calé en rotation, par un moyeu 21, sur un arbre 22 allongé suivant l'axe A, est monté rotatif autour dudit axe A, avec, disposée en dessous dudit disque rotatif 20, parallèlement à celui-ci, une plaque 23 qui, elle, est fixe.

Dans la forme de réalisation représentée, cette plaque 23 s'étend globalement sur toute la section transversale de la virole 18, et, portée par le bâti 16, elle porte elle-même, à sa périphérie, ladite virole 18, tandis que sa zone centrale est ajourée, pour passage de l'arbre 22 et du moyeu 21 calé sur celui-ci.

Mais, en variante, cette plaque 23 pourrait se limiter à une couronne présente au seul voisinage de la virole 18, d'autres dispositions étant prises par ailleurs pour le soutien de celle-ci.

Quoi qu'il en soit, le disque rotatif 20 présente, répartis circulairement à sa périphérie, et donc au voisinage de la virole 18, pour l'entraînement à l'unité des flacons 10 à distribuer, une pluralité d'évidements 25, propres chacun à recevoir, allongé, un tel flacon 10.

Dans la forme de réalisation représentée, ces évidements 25 sont définis par des pattes 26, qui, rapportées de manière amovible, par exemple par des vis 27, sur le disque rotatif 20, sont circonférentiellement écartées l'une de l'autre d'une distance correspondant sensiblement à la hauteur, goulot 13 non compris, des flacons 10, et qui, radialement, s'étendent sensiblement jusqu'au voisinage immédiat de la virole 18, en porte-à-faux à compter du disque rotatif 20.

Une telle disposition est favorable à une adaptation rapide du dispositif de distribution 15 à des flacons 10 de hauteurs différentes.

Il suffit, en effet, de disposer en conséquence les pattes 26 à la périphérie du disque rotatif 20.

Mais, en variante, les évidements 25 que présente ainsi à sa périphérie ce disque rotatif 20 pourraient être formés par des échancrures de celui-ci, l'adaptation à des flacons 10 de hauteurs différentes se faisant alors par un changement d'ensemble de ce disque rotatif 20.

Quoi qu'il en soit, les évidements 25 du disque rotatif 20 forment, avec la plaque fixe 23 sous-jacente, des alvéoles dans lesquels les flacons 10 à distribuer peuvent venir chacun individuellement s'encastrer sensiblement à mi-épaisseur, avec leur goulot 13 surplombant la patte 26 correspondante, comme il est schématisé en traits interrompus pour l'un d'eux à la figure 3.

En partie haute, la plaque fixe 23 présente, sur le trajet des évidements 25 du disque rotatif 20, une ouverture 28, dite ici par simple commodité ouverture de libération, propre au passage un par un des flacons 10 à distribuer.

Tel que représenté, l'arbre 22 sur lequel est calé en rotation le disque rotatif 20 est porté par un palier 29 lui-même porté par le bâti 16, et sur cet arbre 22 est calé en rotation un pignon 30, qui, par une transmission 31, est solidaire en rotation de l'arbre de sortie d'un réducteur 32 dont l'arbre d'entrée est lui-même solidaire en rotation, par une transmission 33, de l'arbre de sortie d'un moteur 34.

Suivant des dispositions qui, connues par elles-mêmes, notamment par le brevet mentionnée précédemment, ne seront pas décrites en détail ici, il est en outre prévu, dans la cuve 17, et tel que schématisé en traits interrompus sur la figure 3, un sabot 35, qui, radialement, a un profil en coin, en allant en s'évasant en direction de la virole 18, tout en ménageant, entre lui et ladite virole 18, au droit des évidements 25 du disque rotatif 20, un couloir 36 propre au passage à l'unité des flacons 10 à distribuer, et qui, circonférentiellement, ne s'étend que sur un secteur circulaire, d'angle au centre de l'ordre par exemple de 180°.

Solidaire d'un moyeu 37 engagé à rotation sur l'arbre 22, ce sabot 35 est en pratique monté rotatif autour dudit arbre 22 suivant un mouvement alternatif de va-et-vient semblable à celui d'un balancier.

Le dispositif de distribution 15 suivant l'invention comporte, en outre, une pluralité de godets de chute 39, qui interviennent entre la cuve 17 et le convoyeur 11 à alimenter, et qui, propres chacun à recevoir à l'unité les flacons 10 à distribuer, sont admis à défiler un par un à l'aplomb de l'ouverture de libération 28 de ladite cuve 17.

Suivant l'invention, ces godets de chute 39 sont portés par un convoyeur intermédiaire 40, c'est-à-dire par un convoyeur distinct à la fois de la cuve 17 et du convoyeur 11 à alimenter.

En pratique, ce convoyeur intermédiaire 40 est un convoyeur qui, fermé sur lui-même en boucle sans fin, en s'étendant suivant un plan sensiblement horizontal, est entraîné en synchronisme avec le disque rotatif 20 de la cuve 17, et qui, par une partie de son trajet, s'étend sous la partie haute du fond 19 de ladite cuve 17, tandis que, par une autre partie dudit trajet, il surplombe le convoyeur 11 à alimenter.

Dans la forme de réalisation représentée, le convoyeur intermédiaire 40 ainsi mis en œuvre suivant l'invention est formé de deux chaînes parallèles 41, qui, échelonnées en hauteur, sont chacune passées sur au moins un pignon d'entraînement 42, et entre les maillons desquelles sont établies, de l'une à l'autre, des tiges verticales 43 jumelées deux à deux, lesdits maillons étant à cet effet des maillons à axe creux.

En pratique, seul un pignon 42 est prévu pour chacune des chaînes 41, et il s'agit d'un pignon d'entraînement.

Les deux pignons 42 que présente ainsi le convoyeur intermédiaire 40 sont l'un et l'autre conjointement calés en rotation, à distance l'un de l'autre, sur un arbre 44, qui est vertical, et qui forme l'arbre de sortie d'un deuxième réducteur 45 dont l'arbre d'entrée est lui-même calé en rotation, par une transmission 46, sur l'arbre d'entrée du réducteur 32 précédent, convenablement prolongé à cet effet.

Le convoyeur intermédiaire 40 mis en œuvre suivant l'invention est ainsi entraîné en synchronisme avec le disque rotatif 20 de la cuve 17.

Par des ergots 47 portés de place en place par les chaînes 41 qui le constituent, et formés par exemple par des prolongements de ses tiges 43, il est en prise avec des guides 48, qui, en coopération avec les pignons d'entraînement 42 desdites chaînes 41, en définissent le trajet.

L'un de ces guides 48, ou guide inférieur, est porté par un plancher 49, qui, lui-même porté par le bâti 16, s'étend en pratique à niveau avec le brin supérieur du convoyeur 11 à alimenter, et l'autre, ou guide supérieur, est porté par un plafond 50, qui s'étend parallèlement au plancher 49, en étant soutenu, de place en place, par des jambages 51 portés par celui-ci.

Les deux guides 48 sont à l'image l'un de l'autre.

Il s'agit de gouttières à section transversale en U, qui ont leurs concavités tournées l'une vers l'autre, et dans la rainure 52 desquelles sont engagées à coulissement les extrémités correspondantes des tiges 43.

En plan, les guides 48 présentent, globalement, un contour en U, avec la concavité de celui-ci tournée vers le pignon d'entraînement 42 correspondant.

L'une des ailes de ce contour, qui est celle la plus proche de la cuve 17, est cintrée, localement, à l'image de cette cuve 17, tandis que l'autre est rectiligne.

Ainsi, le convoyeur intermédiaire 40 mis en œuvre suivant l'invention, côtoie, par un brin, la cuve 17, en épousant localement la forme de celle-ci, tandis que, par son autre brin, il dessert le convoyeur 11 à alimenter, et cet autre brin est avantageusement un brin rectiligne.

Chacun des godets 39 portés par le convoyeur intermédiaire 40 suivant l'invention présente un flasque 53, par lequel il est assujetti à ce convoyeur intermédiaire 40, et deux ailes latérales 54, qui s'étendent en porte-à-faux à compter du flasque 53, sensiblement perpendiculairement à celui-ci.

Suivant un profil en Y pour l'ensemble, ces ailes 54 sont sensiblement parallèles l'une à l'autre à leur partie inférieure, avec un écartement légèrement supérieur au diamètre des flacons 10 à distribuer, et, à leur partie supérieure, elles vont en divergeant vers le haut l'une par rapport à l'autre.

En outre, pour leur adaptation à la pente du fond 19 de la cuve 17, elles sont tronquées en biais à leur extrémité supérieure, leur tranche correspondante s'étendant en oblique vers le bas à l'image de cette pente, à compter du flasque 13 dont elle est issue.

De préférence, et tel que représenté, pour suivre au mieux le fond 19 de la cuve 17 le long de leur trajet, les godets de chute 39 sont montés coulissants sur les tiges 43 du convoyeur intermédiaire 40 qui les porte.

Pour ce faire, le flasque 53 de chacun d'eux porte à son dos une noix 55 par laquelle il est engagé à coulissement sur les deux tiges jumelées 43 correspondantes de ce convoyeur intermédiaire 40.

Conjointement, il est associé à ce convoyeur intermédiaire 40 une came 56 qui suit le contour du bord du fond 19 de la cuve 17, dans la partie haute de celui-ci, et qui est interposée sur le trajet des godets de chute 39, pour commande en coulissement de ceux-ci le long des tiges 43 à raison dudit contour.

Dans la forme de réalisation représentée, cette came 56 est constituée par une simple plaque, qui, cintrée au profil de la cuve 17, est portée par le plancher 49, sensiblement perpendiculairement à celui-ci, en bordure du guide 48 correspondant, et qui, par sa tranche supérieure, est destinée à coopérer avec la surface inférieure de la noix 55 des godets de chute 39, pour élévation, puis retour à leur niveau initial, de ceux-ci.

Du côté des pignons d'entraînement 42, le convoyeur intermédiaire 40 mis en œuvre suivant l'invention se trouve entouré par un capotage 57, qui, en suivant le contour de ces pignons d'entraînement 42, s'étend en pratique de la cuve 17, au droit de l'ouverture de libération 28 de celle-ci, à l'extrémité amont du convoyeur 11 à alimenter, pour un bon maintien latéral des flacons 10 normalement présents dans les godets de chute 39 intéressés par cette partie dudit convoyeur intermédiaire 40.

En pratique, cylindrique dans sa partie basse, ce capotage 57 va en s'évasant en tronc de cône à sa partie haute.

En pratique, également, du côté du convoyeur 11 à alimenter, il se prolonge un peu le long de celui-ci.

Ainsi qu'on le notera, par son extrémité amont, le convoyeur 11 à alimenter est engagé dans une échancrure 58 du plancher 49 au-dessus duquel s'étend, sur une partie au moins de son trajet, le convoyeur intermédiaire 40, afin d'être surplombé par celui-ci à sa dite extrémité amont.

En service, les flacons 10 à distribuer sont déversés en vrac dans la cuve 17.

Ils s'y rassemblent dans la partie basse, où, par brassage, le sabot 35 les contraint peu à peu à s'engager dans le couloir 36, en étant ainsi sensiblement orientés circonférentiellement par rapport au disque rotatif 20, à la périphérie de celui-ci, avec leur goulot 13 dirigé soit dans le sens de rotation de ce disque rotatif 20 soit en sens opposé à celui-ci.

De ce fait, au fur et à mesure de leur passage dans cette partie basse de la cuve 17, certains au moins des évidements 25 que présente à sa périphérique le disque rotatif 20 se voient recevoir chacun un tel flacon 10, avec l'orientation qui est alors la sienne, et l'entraînent en direction de la partie haute de la cuve 17.

Les flacons 10 à distribuer ainsi entraînés se présentent donc à tour de rôle au droit de l'ouverture de libération 28.

Ils sont alors soit goulot 13 en avant, soit goulot 13 en arrière.

Dans tous les cas, leur goulot 13 porte sur la patte 26 correspondante de l'évidement 25 dans lequel ils sont engagés.

S'ils se présentent goulot 13 en avant, cette patte 26 les retient momentanément, et ce n'est qu'après avoir quasi franchi l'ouverture de libération 28 que, venant à basculer autour de ladite patte 26, ils chutent, par leur culot 12, dans ladite ouverture de libération 28.

Si, par contre, ils se présentent goulot 13 en arrière, ils chutent directement, par leur culot 12, dans cette ouverture de libération 28, dès leur présentation à celle-ci.

Dans tous les cas, leur chute se fait culot 12 en avant.

Corollairement, entraînés par le convoyeur intermédiaire 40, les godets de chute 39 se présentent à tour de rôle à l'aplomb de l'ouverture de libération 28, en synchronisme avec les évidements 25 du disque rotatif 20.

Grâce à la came 56, ils passent progressivement, en suivant le fond 19 de la cuve 17, d'une position basse à une position haute, avant de retourner à leur position basse initiale.

Au passage à l'aplomb de l'ouverture de libération 28, ils reçoivent à tour de rôle, culot 12 vers l'avant, un flacon 10 à distribuer, si, conjointement, un tel flacon 10 se trouve effectivement présent dans l'évidement 25 correspondant du disque rotatif 20.

Tout en les guidant convenablement dans leur chute jusqu'à ce qu'ils reposent par leur culot 12 sur le plancher 49, les godets de chute 39 entraînent en direction de l'extrémité amont du convoyeur 11 à alimenter les flacons 10 qu'ils ont ainsi précédemment reçus, et lorsque, ainsi entraînés, ces flacons 10 parviennent à ce convoyeur 11, ils sont à tour de rôle pris en charge par celui-ci.

Pour que cette prise en charge se fasse dans de bonnes conditions, c'est-à-dire pour que le convoyeur intermédiaire 40 se superpose pendant un trajet suffisant avec le convoyeur 11 à alimenter pour que le passage des flacons 10 de l'un à l'autre de ces convoyeurs se fasse progressivement, le convoyeur 11 à alimenter et le brin concerné du convoyeur intermédiaire 40 s'étendent de préférence en sifflet l'un par rapport à l'autre, tel que représenté.

Dans la forme de réalisation représentée, le brin concerné du convoyeur intermédiaire 40 étant rectiligne sur la totalité de sa longueur, en s'étendant sensiblement perpendiculairement à un plan diamétral de l'ensemble, le convoyeur 11 à alimenter s'étend légèrement en oblique par rapport à la normale audit plan diamétral.

Mais, suivant une variante de réalisation non représentée, il est donné, par les guides 48, au convoyeur intermédiaire 40, une configuration telle que, au contraire, le convoyeur 11 à alimenter peut s'étendre sensiblement perpendiculairement au plan diamétral correspondant de l'ensemble, le brin concerné dudit convoyeur intermédiaire 40 s'étendent alors, lui, par exemple, en oblique par rapport à la normale à ce plan diamétral.

Il n'est d'ailleurs pas nécessaire que ce brin du convoyeur intermédiaire 40 s'étende de manière rectiligne sur la totalité de sa longueur.

Il suffit en effet, pour que les flacons 10 ne soient pas l'objet d'une quelconque force centrifuge lorsqu'ils sont déposés sur le convoyeur 11 à alimenter, que seule la partie du brin concerné du convoyeur intermédiaire 40 par laquelle se fait cette pose, c'est-à-dire la partie de ce convoyeur intermédiaire 40 par laquelle, celui-ci, surplombe, pour sa desserte, le convoyeur 11 à alimenter, soit, elle, rectiligne.

La présente invention ne se limite d'ailleurs pas à la forme de réalisation décrite et représentée.

Par exemple, les ergots par lesquels le convoyeur intermédiaire est en prise avec des guides, au lieu d'être constitués par des prolongements de ses tiges, peuvent aussi bien être distincts de celles-ci.

## Revendications

1. Dispositif de distribution, du genre comportant, pour la délivrance, un à un, et dressés verticalement, de quelconques objets (10) à un quelconque convoyeur (11) à alimenter, d'une part, une cuve à axe incliné (17) qui est destinée à recevoir en vrac les objets (10) à distribuer, et dont le fond (19) est formé d'un disque (20) qui est monté rotatif, et qui présente, répartis circulairement à sa périphérie, pour l'entraînement à l'unité desdits objets (10), une pluralité d'évidements (25) propres chacun à recevoir un tel objet (10), avec, disposée en dessous du disque rotatif (20), parallèlement à celui-ci, une plaque (23), qui est fixe, et qui présente, en partie haute, sur le trajet des évidements (25) de ce disque rotatif (20), une ouverture (28) de libération, propre au passage un par un desdits objets (10), et, d'autre part, une pluralité de godets de chute (39), qui interviennent entre la cuve (17) et le convoyeur (11) à alimenter, et qui, propres chacun à recevoir à l'unité les objets (10) à distribuer, sont admis à défiler un par un à l'aplomb de l'ouverture de libération (28) de ladite cuve (17), caractérisé en ce que, les godets de chute (39) sont portés par un convoyeur intermédiaire distinct (40), qui, fermé sur lui-même en boucle sans fin, est entraîné en synchronisme avec le disque rotatif (20) de la cuve (17), et qui, par une partie de son trajet, s'étend sous la partie haute du fond (19) de ladite cuve (17), tandis que, par une autre partie dudit trajet, il surplombe le convoyeur (11) à alimenter.

2. Dispositif de distribution suivant la revendication 1, caractérisé en ce que le convoyeur intermédiaire (40) portant les godets de chute (39) est formé de deux chaînes parallèles (41), qui, échelonnées en hauteur, sont chacune passées sur au moins un pignon d'entraînement (42), et entre les maillons desquelles sont établies, de l'une à l'autre, des tiges (43), sur lesquelles sont montés coulissants lesdits godets de chute (39).

3. Dispositif de distribution suivant la revendication 2, caractérisé en ce que, au convoyeur intermédiaire (40) portant les godets de chute (39), est associée une came (56), qui suit le contour du bord du fond (19) de la cuve (17) dans la partie haute de celui-ci, et qui est interposée sur le trajet desdits godets de chute (39), pour commande en coulissement de ceux-ci le long des tiges (43) à raison dudit contour.

4. Dispositif de distribution suivant l'une quelconque des revendications 1 à 3, caractérisé en ce que, sur une partie au moins de son trajet, le convoyeur intermédiaire (40) portant les godets de chute (39) s'étend au-dessus d'un plancher (49), qui est à niveau avec le convoyeur (11) à alimenter.

5. Dispositif de distribution suivant les revendications 3, 4, prises conjointement, caractérisé en ce que la came (56) est portée par le plancher (49).

6. Dispositif de distribution suivant l'une quelconque des revendications 1 à 5, caractérisé en ce que, par des ergots (47), le convoyeur intermédiaire (40) portant les godets de chute (39) est en prise avec au moins un guide (48).

7. Dispositif de distribution suivant les revendications 4 et 6, prises conjointement, caractérisé en ce que le plancher (49) porte un guide (48).

8. Dispositif de distribution suivant la revendication 7, caractérisé en ce que le convoyeur intermédiaire (40) portant les godets de chute (39) s'étend entre le plancher (49) et un plafond (50), et ledit plafond (50) porte un guide (48) qui est à l'image de celui porté par ledit plancher (49), et avec lequel sont également en prise des ergots (47) appartenant audit convoyeur intermédiaire (40).

9. Dispositif de distribution suivant l'une quelconque des revendications 6 à 8, caractérisé en ce que les ergots (47) du convoyeur intermédiaire (40) sont formés par des prolongements de ses tiges (43).

10. Dispositif de distribution suivant l'une conque des revendications 1 à 8, caractérisé en ce que le convoyeur intermédiaire (40) portant les godets de chute (39) côtoie par un brin la cuve (17), et il dessert par son autre brin le convoyeur (11) à alimenter.

11. Dispositif de distribution suivant l'une quelconque des revendications 1 à 10, caractérisé en ce que la partie au moins du convoyeur intermédiaire (40) portant les godets de chute (39) par laquelle ledit convoyeur intermédiaire (40) surplombe, pour sa desserte, le convoyeur (11) à alimenter, est rectiligne.

## Claims

1. Distribution device of the kind comprising, for the delivery, one by one and aligned vertically, of objects (10) to a feed conveyor (11), on the one hand a tank with inclined axis (17) for receiving in bulk the objects (10) for distribution and the base (19) of which is formed of a disc (20) which is mounted rotationally, the said tank (17) comprising, distributed in a circle at its periphery, for the individual entrainment of the said objets (10), a number of recesses (25) each suitable for receiving such an object (10), with, located beneath the rotational disc (20) and parallel with the latter, a plate (23) which is fixed and which comprises at its top, on the path of the recesses (25) of this rotational disc (20), a discharge opening (28) suitable for the passage one by one of the said objects (10), and on the other, a number of dipper buckets (39) which are located between the tank (17) and the feed conveyor (11) and which, each suitable for receiving individually the objects (10) for distribution, are allowed to move past one by one at right angles to the discharge opening (28) of the said tank (17), characterised in that the dipper buckets (39) are borne by a separate intermediate conveyor (40) which, closed on itself in an endless loop, is driven synchronously with the rotational disc (20) of the tank (17) and which, over part of its path, extends below the top part of the base (19) of the said tank (17), while over another part of the said path it overhangs the feed conveyor (11).

2. Distribution device according to claim 1, characterised in that the intermediate conveyor (40) bearing the dipper buckets (39) is formed of two parallel chains (41) which, staggered in height, are each passed over at least one driving pinion (42), and between the links of which are positioned, from one to the other, rods (43) on which the dipper buckets (39) in question are fitted so as to be able to slide.

3. Distribution device according to claim 2, characterised in that there is associated with the intermediate conveyor (40) bearing the dipper buckets (39) a cam (56) which follows the contour of the edge of the base (19) of the tank (17) in the top part of the said base (19), and which is interposed on the path of the said dipper buckets (39) to control the sliding movement of the latter along the rods (43), following that contour.

4. Distribution device according to any one of claims 1 to 3, characterised in that, over at least a part of its path, the intermediate conveyor (40) bearing the dipper buckets (39) extends above a floor (49) which is level with the feed conveyor (11).

5. Distribution device according to claims 3 and 4 taken together, characterised in that the cam (56) is borne by the floor (49).

6. Distribution device according to any one of claims 1 to 5, characterised in that, by means of lugs (47), the intermediate conveyor (40) bearing the dipper buckets (39) engages with at least one guide (48).

7. Distribution device according to claims 4 and 6 taken together, characterised in that the floor (49) bears a guide (48).

8. Distribution device according to claim 7, characterised in that the intermediate conveyor (40) bearing the dipper buckets (39) extends between the floor (49) and a ceiling (50), and the said ceiling (50) bears a guide (48) which is the image of that borne by the said floor (49) and with which lugs (47) belonging to the intermediate conveyor (40) likewise engage.

9. Distribution device according to any one of claims 6 to 8, characterised in that the lugs (47) of the intermediate conveyor (40) are formed by extensions of its rods (43).

10. Distribution device according to any one of claims 1 to 8, characterised in that the intermediate conveyor (40) bearing the dipper buckets (39) runs with one of its sides alongside the tank (17) and with the other side serves the feed conveyor (11).

11. Distribution device according to any one of claims 1 to 10, characterised in that at least that part of the intermediate conveyor (40) bearing the dipper buckets (39) by which that intermediate conveyor (40) overhangs the feed conveyor (11), in order to serve it, is rectilinear.

## Patentansprüche

1. Verteilungsvorrichtung von der Art, die für die einzelne und vertikale Zuführung von Gegenständen (10) auf eine Fördereinrichtung (11) einerseits eine Wanne mit geneigter Achse (17) aufweist, die zur losen Aufnahme der zu verteilenden Gegenstände (10) bestimmt ist und deren Boden (19) aus einer drehbar angebrachten Scheibe (20) besteht, die zur Einzelmitnahme der genannten Gegenstände (10) am Kreisumfang verteilt eine Vielzahl von Aussparungen (25) aufweist, die jeweils zur Aufnahme eines solchen Gegenstandes (10) geeignet sind, während unterhalb der Drehscheibe (20) und parallel zu dieser eine feststehende Platte (23) angeordnet ist, welche im oberen Teil auf dem Wege der Aussparungen (25) dieser Drehscheibe (20) eine Freigabeöffnung (28) aufweist, durch die die genannten Gegenstände (10) einzeln hindurchtreten können, und andererseits eine Vielzahl von Kippbechern (39), die zwischen der Wanne (17) un der zu beschickenden Fördereinrichtung (11) zum Einsatz kommen und die jeweils zur Aufnahme eines einzelnen zu verteilenden Gegenstandes (10) geeignet sind und einzeln lotrecht an der Freigabeöffnung (28) der genannten Wanne (17) vorbeibewegt werden können, dadurch gekennzeichnet, daß die Kippbecher (39) auf einer anderen Zwischenfördereinrichtung (40) angeordnet sind, die in einer Endlosschleife in sich geschlossen ist und synchron zur Drehscheibe (20) der Wanne (17) angetrieben wird und die sich über einen Teil des Weges unter dem oberen Teil des Bodens (19) der genannten Wanne (17) erstreckt, während sie über einen anderen Teil des Weges über der zu beschickenden Fördereinrichtung (11) hängt.

2. Verteilungsvorrichtung nach Anspruch 1, dadurch gekennzeichnet, daß die Zwischenfördereinrichtung (40) mit den Kippbechern (39) aus zwei parallel verlaufenden Ketten (41) besteht, die, höhenmäßig versetzt, jeweils über wenigstens ein Antriebsritzel (42) verlaufen und zwischen deren Gliedern jeweils Stangen (43) eingesetzt sind, auf denen die genannten Kippbecher (39) verschiebbar sitzen.

3. Verteilungsvorrichtung nach Anspruch 2, dadurch gekennzeichnet, daß der Zwischenfördereinrichtung (40) mit den Kippbechern (39) ein Nocken (56) zugeordnet ist, der der Kontur des Randes des Bodens (19) der Wanne (17) im oberen Teil folgt un der am Weg der genannten Kippbecher (39) eingesetzt ist, um diese längs den Stangen (43) entsprechend der genannten Kontur verschiebbar zu steuern.

4. Verteilungsvorrichtung nach einem der Ansprüche 1 bis 3, dadurch gekennzeichnet, daß sich die Zwischenfördereinrichtung (40) mit den Kippbechern (39) über wenigstens einen Teil des Weges oberhalb eines Bodens (49) erstreckt, der in gleicher Höhe mit der zu beschickenden Fördereinrichtung (11) liegt.

5. Verteilungsvorrichtung nach den Ansprüchen 3, 4 zusammengenommen, dadurch gekennzeichnet, daß der Nocken (56) auf dem Boden (49) aufliegt.

6. Verteilungsvorrichtung nach einem der Ansprüche 1 bis 5, dadurch gekennzeichnet, daß die Zwischenfördereinrichtung (40) mit den Kippbechern (39) über Vorsprünge (47) mit wenigstens einer Führung (48) in Eingriff steht.

7. Verteilungsvorrichtung nach den Ansprüchen 4 und 6 zusammengenommen, dadurch gekennzeichnet, daß der Boden (49) eine Führung (48) trägt.

8. Verteilungsvorrichtung nach Anspruch 7, dadurch gekennzeichnet, daß die Zwischenfördereinrichtung (40) mit den Kippbechern (39) zwischen dem Boden (49) und einer Decke (50) angeordnet ist und daß die genannte Decke (50) eine Führung (48) trägt, die derjenigen entspricht, welche auf dem genannten Boden (49) angebracht ist, und womit ebenfalls Vorsprünge (47) in Eingriff stehen, die zur genannten Zwischenfördereinrichtung (40) gehören.

9. Verteilungsvorrichtung nach einem der Ansprüche 6 bis 8, dadurch gekennzeichnet, daß die Vorsprünge (47) der Zwischenfördereinrichtung (40) aus Verlängerungen der Stangen (43) bestehen.

10. Verteilungsvorrichtung nach einem der Ansprüche 1 bis 8, dadurch gekennzeichnet, daß die Zwischenfördereinrichtung (40) mit den Kippbechern (39) mit einem Trumm bis an die Wanne (17) reicht und mit dem anderen Trumm die zu beschickende Fördereinrichtung (11) versorgt.

11. Verteilungsvorrichtung nach einem der Ansprüche 1 bis 10, dadurch gekennzeichnet, daß mindestens der Teil der Zwischenfördereinrichtung (40) mit den Kippbechern (39), mit dem die genannte Zwischenfördereinrichtung (40) zur Beschickung der Fördereinrichtung (40) zur Beschickung der Fördereinrichtung (11) über dieser überhängt, geradlinig ausgeführt ist.

EP 0 236 174 B1

FIG.1

FIG.2

1

FIG.3

FIG.5

FIG.4

2